# EUROPEAN PATENT APPLICATION

(11) **EP 2 963 308 A1**
(43) Date of publication of application: **06.01.2016**
(21) Application number: 14756939.6
(22) Date of filing: 27.02.2014
(51) Int. Cl.: F16C 33/54, F16C 19/26

(54) **RETAINER FOR RADIAL NEEDLE BEARING AND METHOD FOR MANUFACTURING SAME**

(30) Priority: 01.03.2013 JP 2013040386
(71) Applicant: NSK Ltd., Tokyo 141-8560 (JP)
(72) Inventor: ISHIBASHI, Yutaka, Maebashi-shi Gunma 370-3344 (JP)
(74) Representative: Cabinet Morelle & Bardou SC
(86) International application number: PCT/JP2014/054886
(87) International publication number: WO 2014/133083

(57) **Abstract**

Construction of a retainer for a radial needle bearing is achieved that is able to prevent needles 4 from coming out of pockets 5a even before assembling the radial needle bearing, and is able to sufficiently lessen stress concentration due to force being applied to column sections 3a caused by variation in the speed of revolution of the needles 4. The center sections in the axial direction of the columns 3a are located further on the inner-diameter side than the diameter of the pitch circle of the needles 4, and both end sections in the axial direction of the column sections 3a are located further on the outer-diameter side than the diameter of the pitch circle of the needles 4. Thick sections 13 are formed in portions on both end sections in the axial direction of the column sections 3a that are continuous with the pair of rim sections 2a.

## Description

### TECHNICAL FIELD

The present invention relates to a retainer and a manufacturing method for a retainer that is used for holding needles in a radial needle bearing that is assembled in a rotation support section of an automobile transmission or various kinds of mechanical apparatuses.

### BACKGROUND ART

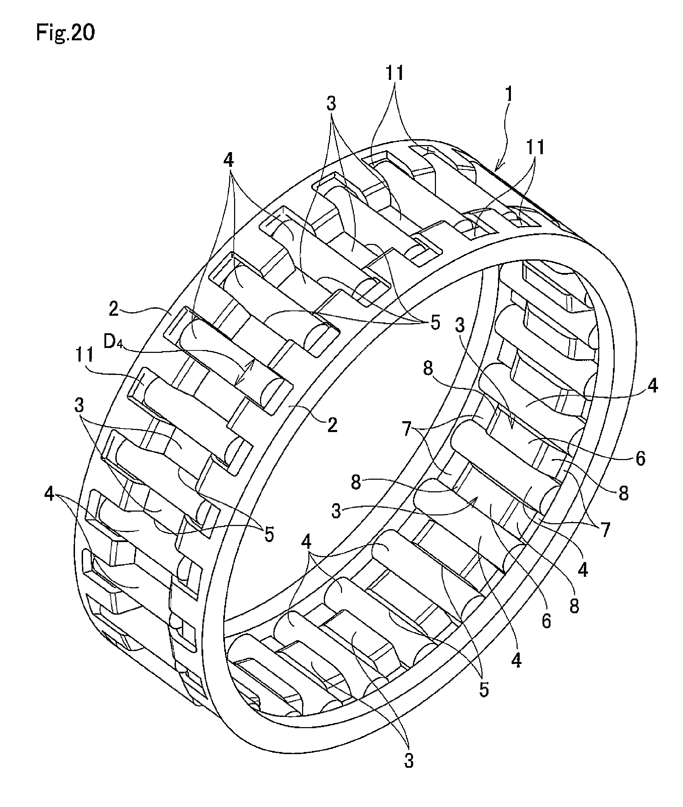

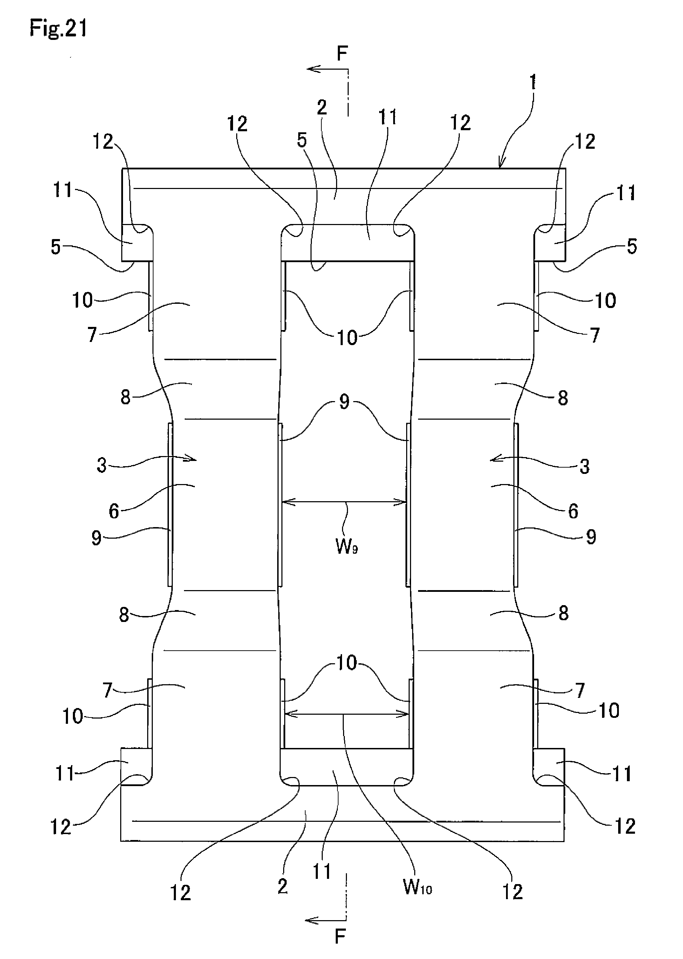

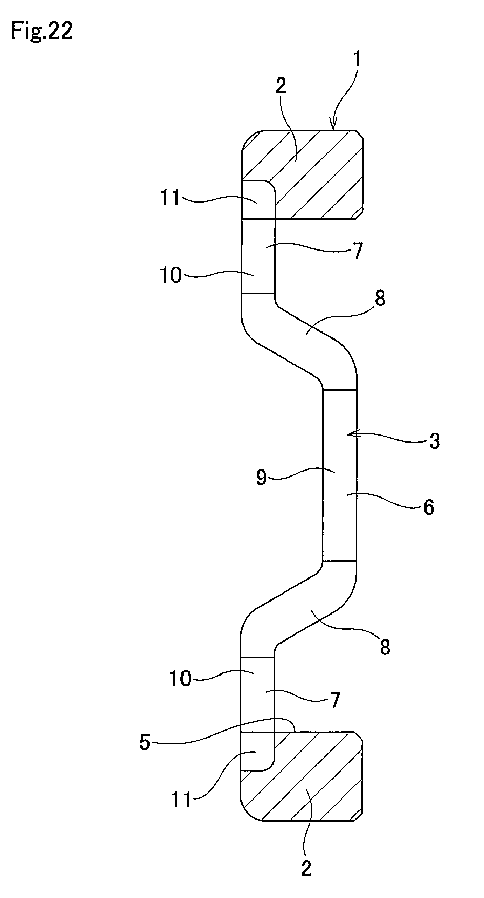

A radial needle bearing is assembled in the portion of a rotation support section of an automobile transmission or various kinds of mechanical apparatuses where large radial loads are applied. FIG. 20 to FIG. 22 illustrate the construction of an example of a retainer that is assembled in such a radial needle bearing as disclosed in JP 2006-342883 (A). The retainer 1 has an overall cylindrical shape. The retainer 1 has: a pair of rim sections 2 that are ring shaped having the same radius as each other, are separated in the axial direction and are concentric with each other; plural column sections 3 that span between the pair of rim sections, and are uniformly spaced in the circumferential direction; and plural pockets that are surrounded on four sides by column sections 3 that are adjacent in the circumferential direction, and the pair of rim sections 2, and that hold needles 4 so as to roll freely. In this specification, the axial direction, circumferential direction and radial direction, unless otherwise stated, mean the axial direction, circumferential direction and radial direction of the retainer.

Each of the column sections 3 is bent like a crank with respect to the axial direction. The middle section in the axial direction of each column section 3 has an inner-diameter-side straight section that is located further inward in the radial direction than the pitch circle of the needles 4; both end sections in the axial direction of each column section 3 has a pair of outer-diameter-side straight sections 7 that are located further outward in the radial direction than the pitch circle of the needles 4; and the end sections in the axial direction of the inner-diameter-side straight sections 6 and the outer-diameter-side straight sections 7 are connected by way of inclined sections 8. The edge sections on both ends in the circumferential direction of the inner-diameter-side straight sections 6 and outer-diameter-side straight sections 7 stick out in the circumferential direction and form inner-diameter-side engaging sections 9 and outer-diameter-side engaging sections 10. The spaces W₉ between inner-diameter-side engaging sections 9 and the spaces W₁₀ between outer-diameter-side engaging sections 10 of adjacent column sections 3 in the circumferential direction on both sides of the pockets 5 are a little less than the diameter D₄ of the needless 4 (W₉, W₁₀ < D₄). In order to hold the needles 4 in the pockets 5, the needles 4 are pressed into the pockets 5 from the radial direction of the retainer 1 while elastically deforming the column sections 3 in the circumferential direction. After the needles 4 have been pressed into the pockets 5, the column sections 3 are elastically restored, and the needles 4 are prevented from accidentally coming out from the pockets 5. Moreover, the spaces W₉ between inner-diameter-side engaging sections 9 and the spaces W₁₀ between outer-diameter-side engaging sections 10 of adjacent column sections 3 are a little larger than the width in the circumferential direction of the portions of the needles 4 that engage with the tip-end edges of the inner-diameter-side engaging sections 9 and outer-diameter-side engaging sections 10 face (portions separated from the maximum diameter), so the needles 4 are held in the pockets 5 so as to be able to rotate freely. The position in the radial direction of the retainer 1 is regulated according to the engagement between the tip-end edges of the inner-diameter-side engaging sections 9 and outer-diameter-side engaging sections 10 and the rolling surfaces of the needles 4, or in other words according to guidance of the rolling bodies.

When the radial needle bearing in which the retainer 1 is assembled operates, the needles 4 revolve while rotating, and the speed of rotation and the speed of revolution do not become completely the same for all of the needles 4. The reason for this is differences in the diameters of all of needles 4, however, mainly this is due to large differences in the conditions of rotation for needles 4 that are in a loaded area and needles 4 that are in a non-loaded area. In either case, when the speed of revolution of the needles 4 of a single radial needle bearing differ, the column sections 3 of the retainer 1 receive a force in the circumferential direction. More specifically, column sections 3 that are located on the front side in the direction of rotation of pockets 5 that hold needles 4 having a fast speed of revolution receive a force in the forward direction in the direction of rotation. However, column sections 3 that are located on the rear side in the direction of rotation of pockets 5 that hold needles 4 having a slow speed of revolution receive a force in the backward direction in the direction of rotation. Therefore, the column sections 3 of the retainer 1 repeatedly receive forces in opposite directions in the circumferential direction during one rotation, and bending stress repeatedly acts on the connecting sections between both end sections in the axial direction of the column sections 3 and the pair of rim sections 2. Consequently, in order to maintain the durability of the retainer 1, it is essential to maintain the strength of the connecting section between both end sections in the axial direction of the column sections 3 and the pair of rim sections 2.

In the case of the construction illustrated in FIG. 20 to FIG. 22, concave sections 11 are formed in portions of the outer circumferential surface of the rim sections 2 that correspond to the connecting sections with the column sections 3. The concave sections 11 prevent interference between the corners 12 of the pockets 5 and the needles 4, and by easing the concentrated stress at the corners 12 by sufficiently maintaining the radius of curvature of the corners 12, the strength of the connecting sections between both end sections in the axial direction of the column sections 3 and the pair of rim sections 2 is maintained. However, in this conventional construction, there are problems in that the width dimensions in the axial direction of the rim sections 2 increase, and in addition to being disadvantageous from the aspect of achieving both maintenance of the load capacity of the radial needle bearing and making the bearing more compact, processing the concave sections 11 is troublesome, so the manufacturing cost increases.

JP H08-270658 (A), JP H04-041115 (U), and JP H05-003645 (U) disclose construction that increases the strength of the column sections by making the dimension of the thickness of both end sections in the axial direction of the column sections larger than the dimension of the thickness of the center section in the axial direction of the column sections. However, in this conventional construction, the column sections are formed into a straight shape so that the entire outer-circumferential surface thereof exists on a single cylindrical surface. In order for this, it is not possible with just the column sections to prevent the needles from coming out from inside the pockets before completing the assembly of the radial needle bearing, and it is necessary to form separate protruding sections using plastic working for preventing the needles from coming out. Therefore, the conventional construction has problems in that the assembly work of the radial needle bearing is troublesome and the cost of processing the retainer is high.

JP H11-101242 (A) discloses improving the durability of a retainer for a radial needle bearing by lessening the stress concentration in the connecting section by constructing the connecting section between the inside surfaces in the axial direction of the pair of rim sections and the inner-circumferential surfaces of the column sections so as to have curved surfaces with a large radius of curvature. However, in this construction, due to variation in the speed of revolution of the needles, it is not always possible to sufficiently lessen the stress concentration due to force applied to the column sections.

JP 2005-233317 (A), JP 2007-211934 (A), JP 2008-215605 (A) and JP 2008-249047 (A) disclose a method of constructing a retainer for a radial needle bearing that combines plastic working and punching.

### [Related Literature]

### [Patent Literature]

[Patent Literature 1] JP 2006-342883 (A)
[Patent Literature 2] JP H08-270658 (A)
[Patent Literature 3] JP H04-041115 (U)
[Patent Literature 4] JP H05-003645 (U)
[Patent Literature 5] JP H11-101242 (A)
[Patent Literature 6] JP 2005-233317 (A)
[Patent Literature 7] JP 2007-211934 (A)
[Patent Literature 8] JP 2008-215605 (A)
[Patent Literature 9] JP 2008-249047 (A)

### SUMMARY OF INVENTION

### [Problem to be Solved by Invention]

In consideration of the situation described above, the object of the present invention is to achieve a retainer for a radial needle bearing that is constructed so as to be able to prevent needles from coming out from inside the pockets before the radial needle bearing is completely assembled, is able to sufficiently lessen stress concentration in the connecting section between column sections and rim sections due to force that is applied to the column sections caused by variation in the speed of revolution of the needles, and is able to maintain excellent durability.

### [Means for Solving Problems]

The retainer for a radial needle bearing of the present invention has an overall cylindrical shape and comprises:
a pair of ring-shaped rim sections that are provided on both end sections in the axial direction so as to be concentric with each other;
plural column sections that span between the pair of rim sections, and are uniformly spaced in the circumferential direction; and
plural pockets that are formed by portions that are surrounded on four sides by column sections that are adjacent in the circumferential direction and the pair of rim sections, and that hold needles so as to roll freely.

Each of the column sections comprises: an inner-diameter-side straight section that is located in the middle section in the axial direction further inward in the radial direction than the pitch circle of the needles; outer-diameter-side straight sections that are located in the portions near both ends in the axial direction further outward in the radial direction than the pitch circle of the needles; and inclined sections that connect the end sections in the axial direction of the inner-diameter-side straight section and of the pair of outer-diameter-side straight sections.

Inner-diameter-side engaging sections are provided on the edges of both ends in the circumferential direction of the inner-diameter side straight section so as to protrude in the circumferential direction; outer-diameter-side engaging sections are provided on the edges of both ends in the circumferential direction of the outer-diameter-side straight sections so as to protrude in the circumferential direction; and the spaces between inner-diameter-side engaging sections, and the spaces between outer-diameter-side engaging sections of column sections that are adjacent in the circumferential direction are smaller than the outer diameter of the needles.

Particularly, in the retainer for a radial needle bearing of the present invention, thick sections having a thickness in the radial direction that is greater than the thickness in the radial direction of the middle section in the axial direction of the column section are provided in portions on both end sections in the axial direction of the column sections between the outer-diameter-side straight sections and the pair of rim sections with regard to the axial directions so as to be continuous with the inside surfaces of the pair of rim sections.

Preferably, the diameter of the inscribed circle of the thick sections and the inner diameter of the pair of rim sections are equal to each other, and/or the diameter of the circumscribed circle of the thick sections and the outer diameter of the pair of rims sections are equal to each other. In other words, the outer-circumferential surfaces of the pair of rim sections and the outer-circumferential surfaces of both end sections in the axial direction of the column sections are on a single cylindrical surface, and/or the inner-circumferential surfaces of the pair of rim sections and the inner-circumferential surfaces of both end sections in the axial direction of the column sections are on a single cylindrical surface. In this case, preferably, the diameter of the inscribed circle of the thick sections and the diameter of the inscribed circle of the inner-diameter-side engaging sections are practically equal except for differences due to manufacturing error.

Alternatively, it is also possible for the diameter of the circumscribed circle of the thick sections and the outer diameter of the pair of rim sections to be equal to each other; the outer-circumferential surfaces of the pair of rim sections and the outer-circumferential surface on both end sections in the axial direction of the column sections to be on a single cylindrical surface; and the diameter of the inscribed circle of the thick sections to be larger than the inner diameter of the pair of rim sections. In this case, preferably, the inner-circumferential surfaces of the thick sections, and the inner-circumferential surfaces of the outer-diameter-side engaging sections are connected by inclined surfaces that are inclined in a direction such that the inner diameter becomes larger going toward the center in the axial direction of the column sections.

Alternatively, it is also possible for the diameter of the circumscribed circle of the thick sections and the outer diameter of the pair of rim sections to be equal to each other; the outer-circumferential surfaces of the pair of rim sections and the outer-circumferential surfaces of both end sections in the axial direction of the column sections to be on a single cylindrical surface; and the diameter of the inscribed circle of the thick sections and the inner diameter of the pair of rim sections to be larger than the diameter of the inscribed circle of the inner-diameter-side engaging sections.

Alternatively, the diameter of the circumscribed circle of the thick sections and the outer diameter of the pair of rim sections can be smaller than the diameter of the circumscribed circle of the outer-diameter-side engaging sections. In this case, preferably, the outer-circumferential surfaces of the thick sections and the rim sections are inclined surfaces that are inclined in a direction such that the outer diameter becomes larger going toward the center section in the axial direction. Alternatively, or additionally, it is preferred that the inner-circumferential surfaces of the thick sections are inclined surfaces that are inclined in a direction such that the inner diameter becomes larger going toward the center section in the axial direction. Furthermore, in the cases above, preferably, the diameter of the inscribed circle of the thick sections and the diameter of the inscribed circle of the inner-diameter-side engaging sections are practically equal. Alternatively, it is also possible for the diameter of the inscribed circle of the thick sections and the inner diameter of the pair of rim sections to be larger than the diameter of the inscribed circle of the inner-diameter-side engaging sections.

The manufacturing method for a retainer for a radial needle bearing of the present invention comprises steps of: forming a ring-shaped intermediate material by performing a turning process on the inner-circumferential surface and outer-circumferential surface of a cylindrical metal material so as to have a cross-sectional shape in a virtual plane that includes the center axis of the retainer for a radial needle bearing that is to be obtained, and that coincides with the cross-sectional shape of the portion that includes the column sections; and forming pockets by punching out part of the intermediate material in the radial direction.

Alternatively, the manufacturing method for a retainer for a radial needle bearing of the present invention comprises steps of: forming a band-shaped first intermediate material having a specified length by performing plastic working on a band-shaped metal material so as to have a cross-sectional shape in a virtual plane that includes the center axis of the retainer for a radial needle bearing that is to be obtained, and that coincides with the cross-sectional shape of the portion that includes the column sections; forming a ring-shaped second intermediate material by rolling up the first intermediate material with regard to the lengthwise direction, and welding together both end sections in the lengthwise direction of the first intermediate material; and forming pockets by punching out part of the second intermediate material in the radial direction.

Alternatively, the manufacturing method for a retainer for a radial needle bearing of the present invention comprises steps of: forming a band-shaped first intermediate material having a specified length by performing plastic working on a band-shaped metal material so as to have a cross-sectional shape in a virtual plane that includes the center axis of the retainer for a radial needle bearing that is to be obtained, and that coincides with the cross-sectional shape of the portion that includes the column sections; forming through holes that will become the pockets by punching out part of the first intermediate material, and obtaining a second intermediate material; cutting the second intermediate material to a specified length; and rolling up the second intermediate material with regard to the lengthwise direction, and welding together both end sections in the lengthwise direction of the second intermediate material.

### [Effect of Invention]

With the retainer for a radial needle bearing of the present invention, even in the case of construction in which the needles are prevented from coming out from inside the pockets before the radial needle bearing is completely assembled, it is possible to sufficiently lessen stress concentration in the connecting section between the column sections and the pair of rim sections of the retainer for the radial needle bearing due to forces that are applied to the column sections of the radial needle bearing that are caused by variation in the speed of revolution of the needles, and thus excellent durability is maintained.

Preventing the needles from coming out of the pockets is achieved by constructing each column section so that an inner-diameter side straight section comprising inner-diameter-side engaging sections is provided in the middle section in the axial direction, and outer-diameter-side straight sections comprising outer-diameter-side engaging sections are provided on the portions near both ends in the axial direction. Moreover, maintaining durability by lessening the concentrated stress in the connecting sections between the column sections and the rim sections is achieved by providing thick sections on both end sections in the axial direction of the column sections. Providing the thick sections and the work of forming pockets in the intermediate material in which the portions that correspond to the thick sections are made to be thick can be executed by a procedure similar to the case in which thick sections are not provided. Therefore, manufacturing cost of the retainer for a radial needle bearing of the present invention does not increase due to providing the thick sections.

### BRIEF DESCRIPTION OF DRAWINGS

FIG. 1 is a perspective view of a retainer for a radial needle bearing of a first example of an embodiment of the present invention.
FIG. 2 is an enlarge view of portion A in FIG. 1.
FIG. 3 is a cross-sectional view of section B-B in FIG. 2.
FIG. 4A and FIG. 4B are views for explaining the dimensions of each part of a pocket, and illustrate the shape of a pocket as seen in the radial direction.
FIG. 5 is a perspective view of an intermediate material that is obtained in a process for manufacturing the retainer of a first example.
FIG. 6 is similar to FIG. 3, and illustrates a retainer of a second example of an embodiment of the present invention.
FIG. 7 is similar to FIG. 3, and illustrates a retainer of a third example of an embodiment of the present invention.
FIG. 8 is similar to FIG. 3, and illustrates a retainer of a fourth example of an embodiment of the present invention.
FIG. 9 is similar to FIG. 2, and illustrates a retainer of a fifth example of an embodiment of the present invention.
FIG. 10 is a cross-sectional view of section C-C in FIG. 9.
FIG. 11 is a partial front view of the retainer of a fifth example, and in order to explain the flow path of lubricant, illustrates the held state of the needles as seen in axial direction.
FIG. 12 is similar to FIG. 2, and illustrates a retainer of a sixth example of an embodiment of the present invention.
FIG. 13 is a cross-sectional view of section D-D in FIG. 12.
FIG. 14 is similar to FIG. 3, and illustrates a retainer of a seventh example of an embodiment of the present invention.
FIG. 15 is similar to FIG. 2, and illustrates a retainer of an eighth example of an embodiment of the present invention.
FIG. 16 is a cross-sectional view of section E-E in FIG. 15.
FIG. 17 is similar to FIG. 3, and illustrates a retainer of a ninth example of an embodiment of the present invention.
FIG. 18 is similar to FIG. 3, and illustrates a retainer of a tenth example of an embodiment of the present invention.
FIG. 19 is similar to FIG. 3, and illustrates a retainer of an eleventh example of an embodiment of the present invention.
FIG. 20 is a perspective view of an example of conventional construction of a retainer for a radial needle bearing, and illustrates the state of needles being held in pockets.
FIG. 21 is a view as seen from the outside in the radial direction of part of the retainer illustrated in FIG. 20 with the needles omitted.
FIG. 22 is a cross-sectional view of section F-F in FIG. 21.

### MODES FOR CARRYING OUT INVENTION

### [First Example]

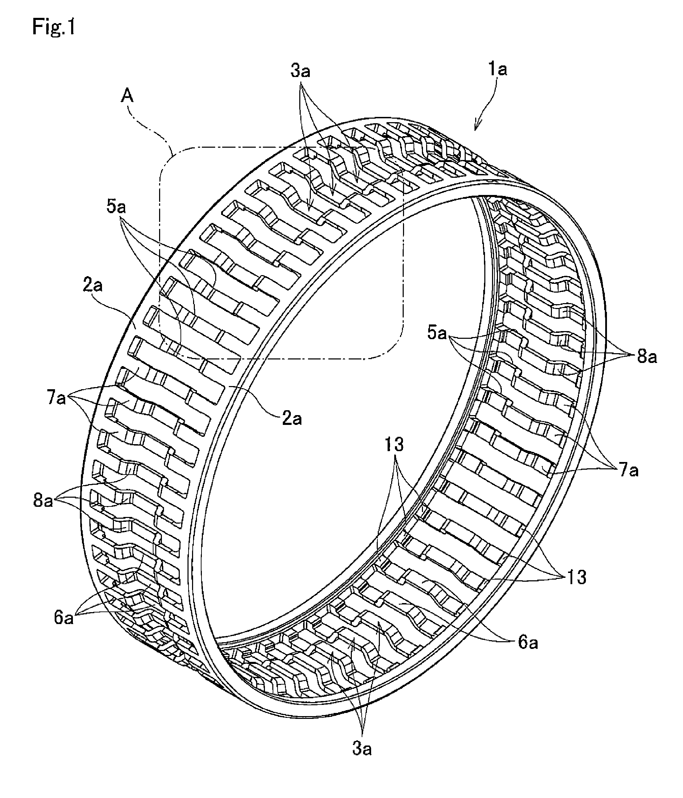

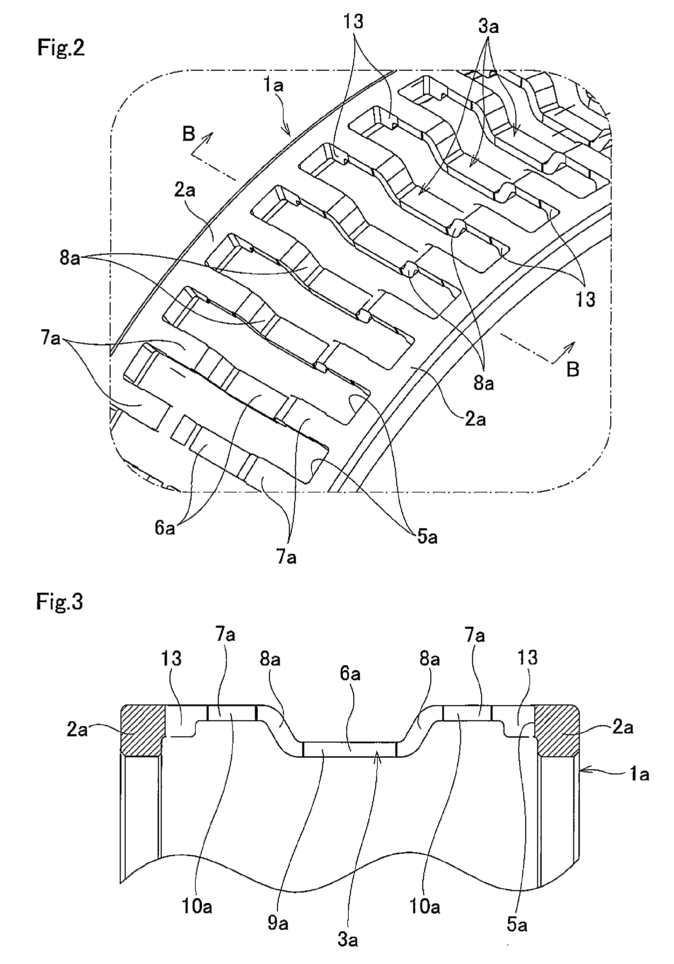

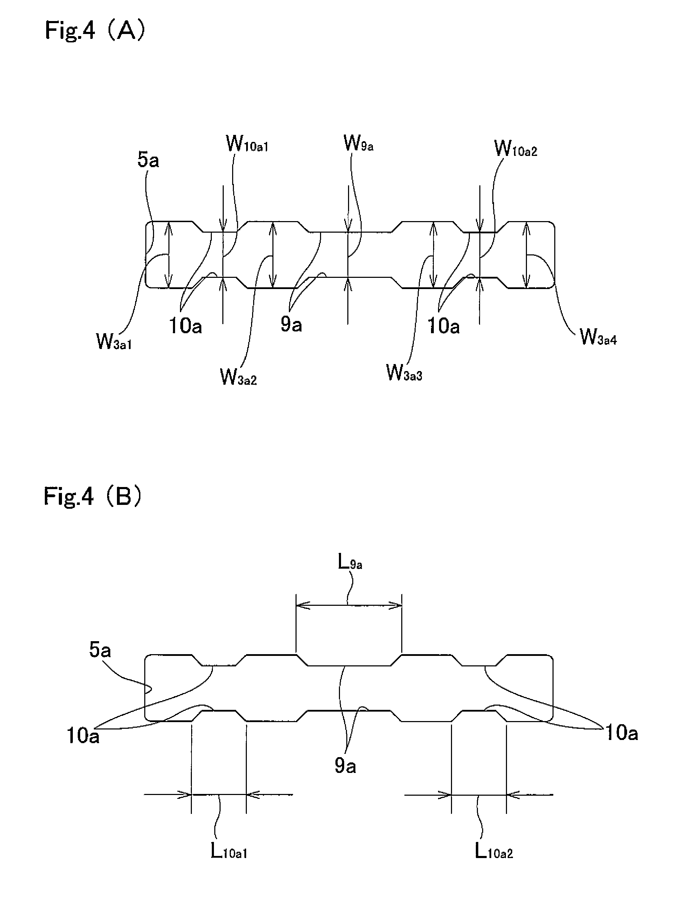

FIG. 1 to FIG. 5 illustrate a first example of an embodiment of the present invention. The retainer 1a for a radial needle bearing of this example is made of ferrous alloy such as stainless steel, or copper alloy such as brass, and is formed into a single piece having an overall cylindrical shape; the retainer 1a having a pair of ring-shaped rim sections 2a that are spaced apart in the axial direction and concentric with each other, and plural column sections 3a that are uniformly arranged in the circumferential direction and that span between the pair of rim sections 2a. The portions that are surrounded on four sides by column sections 3a that are adjacent in the circumferential direction and the pair of rim sections 2a function as pockets 5 for holding needles 4 so as to be able to roll freely.

Each of the column sections 3a has a shape that is bent like a crank with regard to the axial direction. More specifically, the middle section in the axial direction of each of the column sections 3a is constructed by an inner-diameter-side straight section 6a that is located further inward in the radial direction than the pitch circle of the needles 4, and the portions near both end sections in the axial direction of each column section 3a is constructed by an outer-diameter-side straight section 7a that is located further outward in the radial direction than the pitch circle of the needles 4. The end sections in the axial direction of the inner-diameter-side straight sections 6a and the outer-diameter-side straight sections 7a are connected with each other by way of inclined sections 8a. The edge sections on both ends in the circumferential direction of the inner-diameter-side straight sections 6a and the outer-diameter-side straight sections 7a protrude out in the circumferential direction and form inner-diameter-side engaging sections 9a and outer-diameter-side engaging sections 10a. The space W₉ₐ between inner-diameter-side engaging sections 9a of adjacent column sections 3a in the circumferential direction on both sides of a pocket 5a is a little smaller than the diameter D₄ (see FIG. 20) of the needles 4 (W₉ₐ < D₄). Moreover, the spaces W₁₀ₐ₁, W₁₀ₐ₂ between outer-diameter-side engaging sections 10a are equal to each other, and are a little smaller than the diameter D₄ of the needles 4 (W₁₀ₐ₁ = W₁₀ₐ₂ < D₄). The space W₃ₐ₁, W₃ₐ₂, W₃ₐ₃ and W₃ₐ₄ between portions of the column sections 3a that are adjacent in the circumferential direction, the portions being separated from the inner-diameter-side engaging sections 9a and the outer-diameter-side engaging sections 10a, are equal to each other and a little larger than the diameter D₄ of the needles 4 (W₃ₐ₁ = W₃ₐ₂ = W₃ₐ₃ = W₃ₐ₄ > D₄). Furthermore, the length L₉ₐ in the axial direction of the inner-diameter-side engaging sections 9a are equal to each other, and the lengths L₁₀ₐ₁, L₁₀ₐ₂ in the axial direction of the outer-diameter-side engaging sections 10a are also equal to each other.

In the retainer 1a of this example, thick sections 13 having a thickness in the radial direction that is thicker than the middle sections in the axial direction of the column sections 3a (and portions near both ends in the axial direction), or in other words, thicker than the thickness in the radial direction of the inner-diameter-side straight sections 6a and outer-diameter-side straight sections 7a, are provided on both end sections in the axial direction of the column sections 3a between the outer-diameter-side straight sections 7a and the pair of rim sections 2a. That is, thick sections 13 are formed in portions of the column sections 3a that are located between the outer-diameter-side engaging sections 10a and the pair of rim sections 2a with regard to the axial direction so as to be continuous with the inside surfaces of the rim sections 2a. The maximum thickness in the radial direction of the thick sections 13 is sufficiently greater than the thickness of the middle sections in the axial direction of the column sections 3a.

In this example, the diameter of the circumscribed circle of the thick sections 13 and the outer diameter of the pair of rim sections 2a are equal to each other, and the outer-circumferential surface of the pair of rim sections 2a and the outer-circumferential surfaces of both end sections in the axial direction of the column sections 3a are located on a single cylindrical surface. Moreover, the diameter of the inscribed circle of the thick sections 13 is larger than the inner diameter of the pair of rim sections 2a, and is less than the diameter of the inscribed circle of the outer-diameter-side straight sections 7a where the outer-diameter-side engaging sections 10a are provided (portions nearer the center in the axial direction than the thick sections 13).

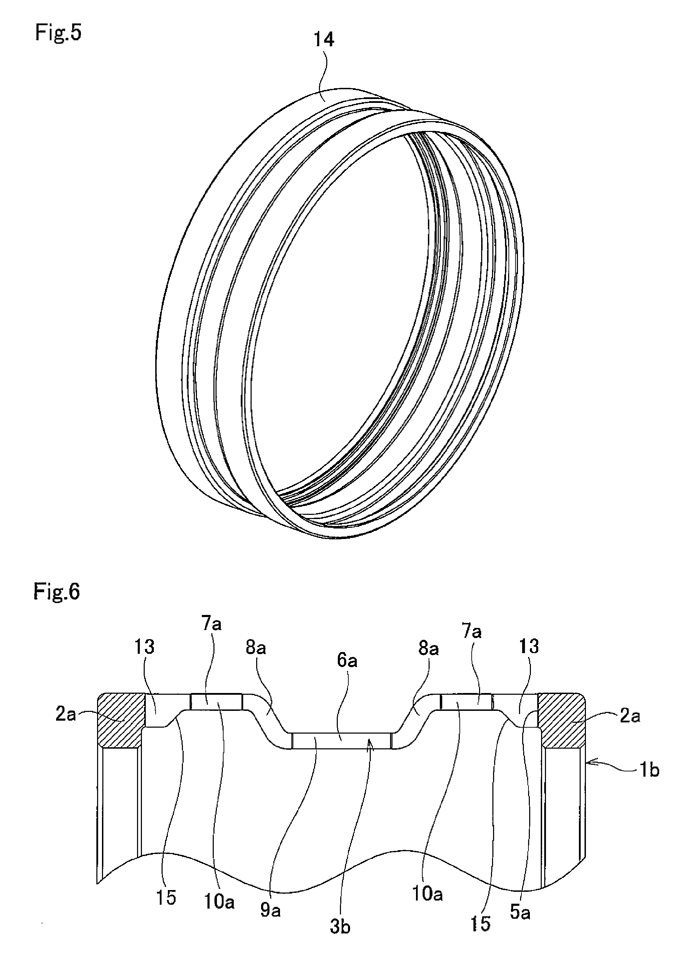

The retainer 1a of this example is obtained by punching (piercing) a ring-shaped intermediate material 14 as illustrated in FIG. 5 using a punching die (piercing die) to form pockets 5a. The intermediate material 14 is obtained by extruding a ferrous alloy such as stainless steel, or a copper alloy such as brass, and performing a turning process on both the inner and outer circumferential surfaces of the tip-end sections of the long cylindrical shaped metal material so that the cross-sectional shape of the tip-end sections of the metal material on a virtual plane that includes the center axis of the retainer 1a coincides with the cross-sectional shape of the portion of the retainer 1a that includes the column sections 3a. Next, the tip-end sections of the metal material after the turning process has been performed are cut to obtain a ring-shaped intermediate material 14. After that, pockets 5a are formed by punching part of the intermediate material 14 in the radial direction, and the retainer 1a is obtained. By using a manufacturing method that has processes such as these, it is possible to make the precision of the shape of the obtained retainer 1a good.

Alternatively, plastic working is performed on a band-shaped metal material in order to form a band-shaped first intermediate material having a specified length and having a cross-sectional shape on a virtual plane that includes the center axis of the retainer for a radial needle bearing that is to be obtained and that coincides with the cross-sectional shape of the portion that includes the column sections. Next, a ring-shaped second intermediate material is obtained by rolling the first intermediate material with regard to the lengthwise direction and connecting both end sections in the lengthwise direction of the first intermediate material by welding. After that, pockets 5a are formed by punching part of the second intermediate material in the radial direction, and the retainer 1a is obtained. After the first intermediate material has been formed, the retainer 1a can also be obtained by punching part of the first intermediate material to form through holes that will become pockets 5a, obtaining a second intermediate material; then cutting the second intermediate material to a specified length and rolling up the second intermediate material with regard to the lengthwise direction thereof, and finally welding together both end sections in the lengthwise direction of the second intermediate material.

In this example, the dimension of the thickness of the thick sections 13 is sufficiently small when compared with the pair of rim sections 2a, so no special processing is necessary when manufacturing the retainer 1a, and in any manufacturing method, it is possible to keep the load that is applied to the punching die when punching the pockets 5a small, so it is possible to maintain the durability of the punching die and thus it is possible to keep down manufacturing costs of the retainer.

Holding the needles 4 in the pockets 5a of the retainer 1a that was obtained by such processing so as to be able to roll freely is performed by pressing the needles 4 into the pockets 5a from the radial direction of the retainer 1a while elastically deforming the column sections 3a in the circumferential direction. The work of pressing the needles 4 can be performed for each pocket 5a individually, or can be performed at the same time for plural pockets 5a, however, in order to allow for elastic deformation of the column sections 3a, preferably simultaneously pressing needles 4 into pockets 5a that are adjacent in the circumferential direction should be avoided. In any case, after the needles 4 have been pressed into the pockets 5a, the column sections 3a are elastically restored, and the needles 4 will not accidentally come out from the pockets 5a.

With the radial needle bearing in the assembled state, the inner-diameter-side engaging sections 9a and the outer-diameter-side engaging sections 10a face the portions of the needles 4 that are separated in the radial direction of the retainer 1a from the maximum diameter portions thereof. The space W₉ₐ between the inner-diameter-side engaging sections 9a, and the spaces W₁₀ₐ₁, W₁₀ₐ₂ between the outer-diameter-side engaging sections 10a are a little larger than the width in the circumferential direction of the portions of the needles 4 that the tip-end edges of the inner-diameter-side engaging sections 9a and the outer-diameter-side engaging sections 10a face. Therefore, the needles 4 are held inside the pockets 5a so as to be able to roll freely. Moreover, the position in the radial direction of the retainer 1a is regulated by the engagement between the tip-end edges of the inner-diameter-side engaging sections 9a and the outer-diameter-side engaging sections 10a and the rolling surfaces of the needles 4, or in other words by rolling body guidance.

During operation of the radial needle bearing, the column sections 3a receive forces in alternating directions from the needles 4 with regard to the circumferential direction. The forces act as repeated moments on the connecting sections at the bases of the column sections 3a between both end sections in the axial direction of the column sections 3a and the pair of rim sections 2a, and generate bending stresses at the bases of the column sections 3a. In the case of the retainer 1a of this example, there are thick sections 13 at the bases of the column sections 3a, so the maximum value of the bending stresses that are generated due to the repeated moments is kept low, so it is possible to maintain the durability of the retainer 1a.

### [Second Example]

FIG. 6 illustrates a second example of an embodiment of the present invention. In the case of the retainer 1b of this example, the inner-circumferential surfaces of the thick sections 13 that are formed on both end sections in the axial direction of the column sections 3b and the inner-circumferential surfaces of the outer-diameter-side straight sections 7a are continuous by way of inclined surfaces 15. These inclined surfaces 15 are inclined in a direction such that the inner diameter becomes larger in the direction toward the center side in the axial direction of the column sections 3b.

By using the retainer of this example in which these kinds of inclined surfaces 15 are provided, it is possible to make the change in thickness in the radial direction at the boundary between the thick sections 13 and the outer-diameter-side straight sections 7a smooth. As a result, it become easy to punch and form the pockets 5a using the punching die. In other words, when punching the pockets 5a, the amount of unbalance in the force that is applied to the punching die is lessened, so it is possible to maintain the punching precision of the pockets 5a and the durability of the punching dies, and the manufacturing cost of the retainer can be kept down. The other construction and functions are the same as in the first example of an embodiment.

### [Third Example]

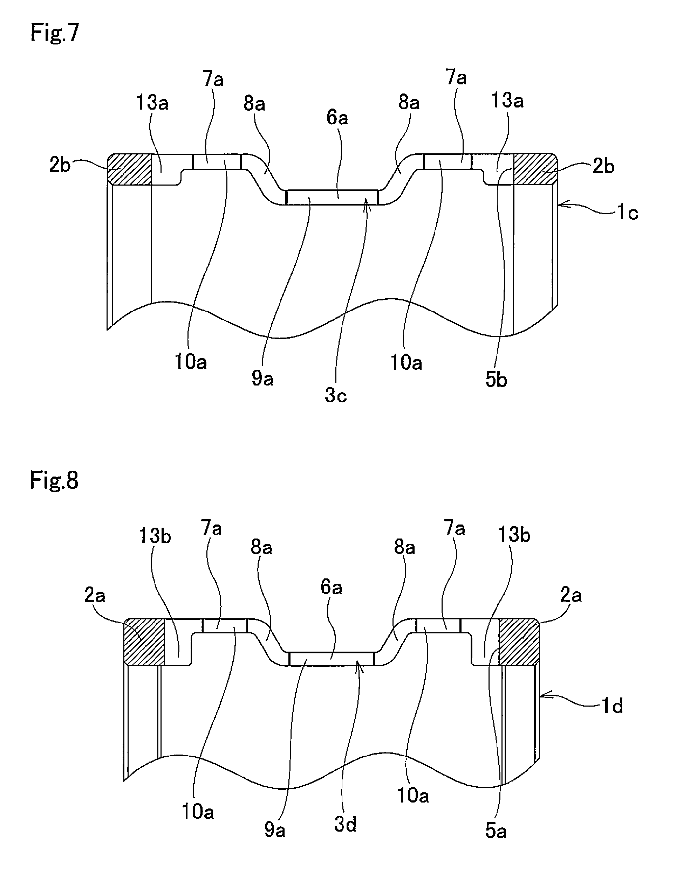

FIG. 7 illustrates a third example of an embodiment of the present invention. In the case of the retainer 1c of this example, the diameter of the circumscribed circle of the thick sections 13a and the outer diameter of the pair of rim sections 2b are equal with each other, and the outer-circumferential surfaces of the pair of rim sections 2b and the outer-circumferential surfaces of both end sections in the axial direction of the column sections 3c are located on a single cylindrical surface. However, in this example, the diameter of the inscribed circle of the thick sections 13a, and the inner diameter of the pair of rim sections 2b are equal to each other, and the diameter of the inscribed circle of the thick sections 13a and the inner diameter of the pair of rim sections 2b are larger than the diameter of the inscribed circle of the inner-diameter-side straight sections 6a that form the center sections in the axial direction of the column sections 3c.

In the case of this example, the area of the opening of a ring-shaped space that exists between the inner-circumferential surface of the pair of rim sections 2b and the outer-circumferential surface of a member such as a rotating shaft that is located on the inner-diameter side of the retainer 1c can be expanded by widening the width in the radial direction of the ring-shaped space while maintaining the ability to prevent the needles 4 (see FIG. 20) from coming out from the pockets 5b. Therefore, it becomes easier for a sufficient amount of lubricant to flow into the inside of the radial needle bearing that includes the retainer 1c. The other construction and functions are the same as in the first example of an embodiment.

### [Fourth Example]

FIG. 8 illustrates a fourth example of an embodiment of the present invention. In the case of the retainer 1d of this example, the diameter of the inscribed circle and the diameter of the circumscribed circle of thick sections 13b are equal with the inner diameter and outer diameter of the pair of rim sections 2a. As a result, the outer-circumferential surfaces of the pair of rim sections 2a, and the outer-circumferential surfaces of both end sections in the axial direction of the column sections 3d are located on a single cylindrical surface, and the inner-circumferential surfaces of the pair of rim sections 2a and the inner-circumferential surfaces of both end sections in the axial direction of the column sections 3d are located on a single cylindrical surface. Furthermore, in the case of the retainer 1d of this example, the diameter of the inscribed circle of the thick sections 13b and the diameter of the inscribed circle of the inner-diameter-side straight sections 6a where the inner-diameter-side engaging sections 9a are provided are essentially the same. In other words, the inner-circumferential surfaces of the pair of rim sections 2a and the inner-circumferential surfaces of center section and both end sections in the axial direction of the column sections 3d are located on a single cylindrical surface. In the case of the retainer 1d of this example, the dimension of the thickness of the thick sections 13b is larger than in the case of the first through third examples of an embodiment, so it is possible to further improve the strength of the connecting sections between both end sections in the axial direction of the column sections 3d and the pair of rim sections 2a. The other construction and functions are the same as in the first example of an embodiment.

### [Fifth Example]

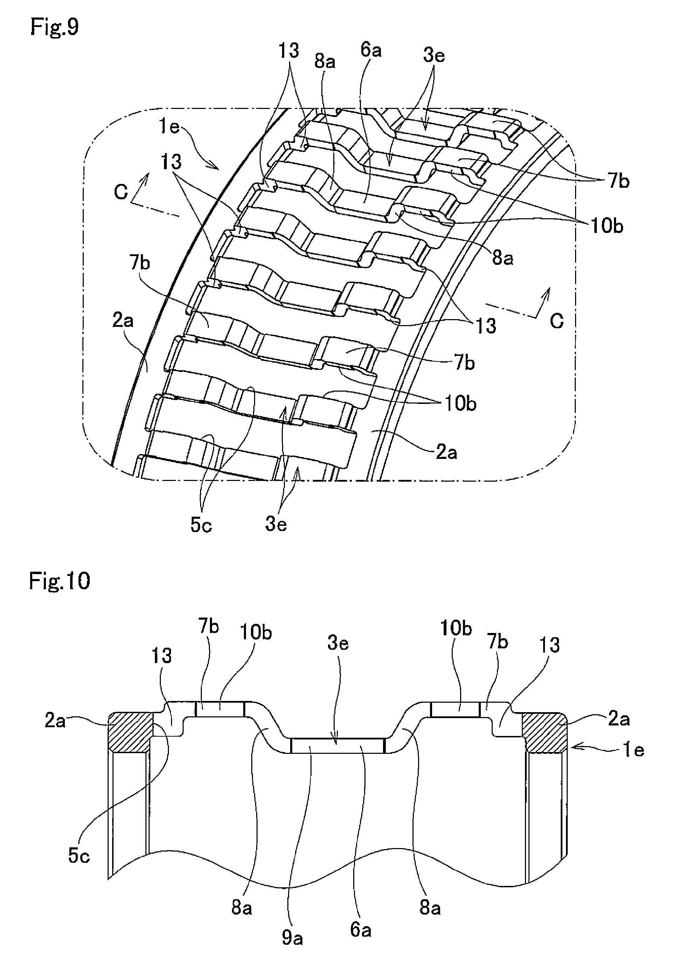

FIG. 9 to FIG. 11 illustrate a fifth example of an embodiment of the present invention. In the case of the retainer 1e of this example, both end sections in the axial direction of the column sections 3e are bent like a crank. In other words, the outer-circumferential surfaces of outer-diameter-side straight sections 7b that are provided in the portions near both ends of the middle section in the axial direction of the column sections 3e, the edges on both ends in the circumferential direction thereof functioning as outer-diameter-side engaging sections 10b, are located further outward in the radial direction than the outer-circumferential surfaces of the pair of rim sections 2a.

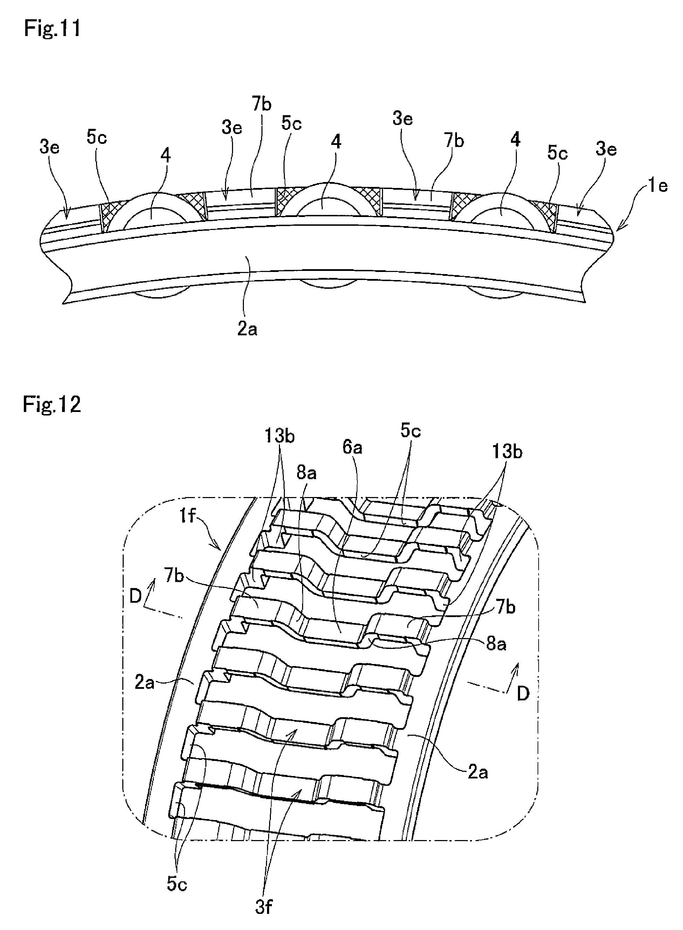

In the case of this example in which the portions near both ends of the middle section in the axial direction of the column sections 3e are located further outward in the radial direction than the pair of rim sections 2a in this way, when the needles 4 are held in the pockets 5c of the retainer 1e and the retainer 1e and the needles 4 are assembled between the inner raceway and outer raceway, part of the needles 4 largely protrude outward in the radial direction further than the outer-circumferential surfaces of the pair of rim sections 2a as illustrated in FIG. 11. The portions indicated by the diagonal lattice markings in FIG. 11 are the lubricant flow paths for lubricating the radial needle bearing. As can be clearly seen from FIG. 11, it is possible to sufficiently maintain the area of the portion of the flow path. Moreover, by the centrifugal force that is applied during operation of a rotating mechanical apparatus in which a radial needle bearing is assembled, the lubricant becomes concentrated at the portions near the outside in the radial direction near the outer raceway. In the case of a radial needle bearing in which the retainer 1e of this example is assembled, it is possible to provide lubricant flow paths having a large area in the portions near the outside in the radial direction where the lubricant concentrates in this way, so it is possible to better maintain good lubrication.

Furthermore, because the outer diameter of the pair of rim sections 2a that are located in both end sections in the axial direction of the retainer 1e is small, the work of inserting the retainer 1e in which the needles 4 are respectively held in the pockets 5c on the inner-diameter side of a gear or the like which has an inner-circumferential surface where the outer raceway is formed becomes easy. The other construction and functions are the same as in the first example of an embodiment.

### [Sixth Example]

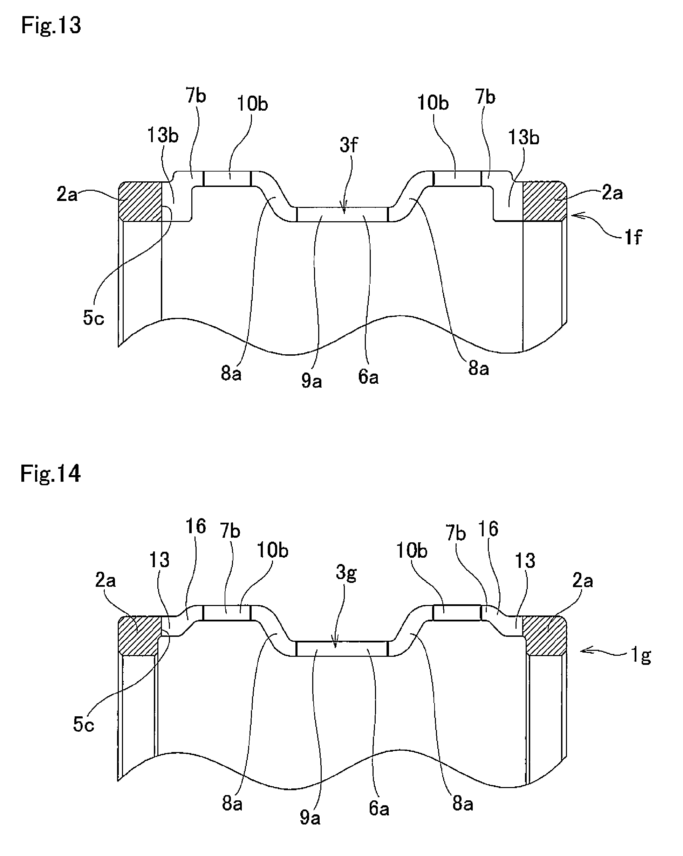

FIG. 12 and FIG. 13 illustrate a sixth example of an embodiment of the present invention. In the case of the retainer 1f of this example, as in the fourth example of an embodiment, the diameter of the inscribed circle and the diameter of the circumscribed circle of the thick sections 13b and the inner diameter and outer diameter of the pair of rim sections 2a are equal to each other. With construction such as this, increasing the dimension of the thickness of the thick sections 13b, and increasing the strength of the connecting sections between both end sections in the axial direction of the column sections 3f and the pair of rim sections 2a are the same as in the fourth example of an embodiment. Moreover, improving lubrication by locating the outer-circumferential surfaces of the outer-diameter-side straight sections 7b further outward in the radial direction than the outer-circumferential surfaces of the pair of rim sections 2a is the same as in the fifth example of an embodiment.

### [Seventh Example]

FIG. 14 illustrates a seventh example of an embodiment of the present invention. In the case of the retainer 1g of this example, the continuous sections 16 between the thick sections 13 that are provided on both end sections of the column sections 3g and the outer-diameter-side straight sections 7b are inclined in a direction outward in the radial direction going toward the center in the axial direction of the retainer 1g. By making the continuous sections 16 inclined in this way, the resistance against the flow of lubricant to the inside of the lubricant flow paths located between the outer-circumferential surface of the retainer 1g and the outer raceway can be kept low. Furthermore, by making the continuous sections 16 inclined, it is possible to simplify the work of inserting the retainer 1g into the inner-diameter side of a gear or the like. The other construction and functions are the same as in the fifth example of an embodiment.

### [Eight Example]

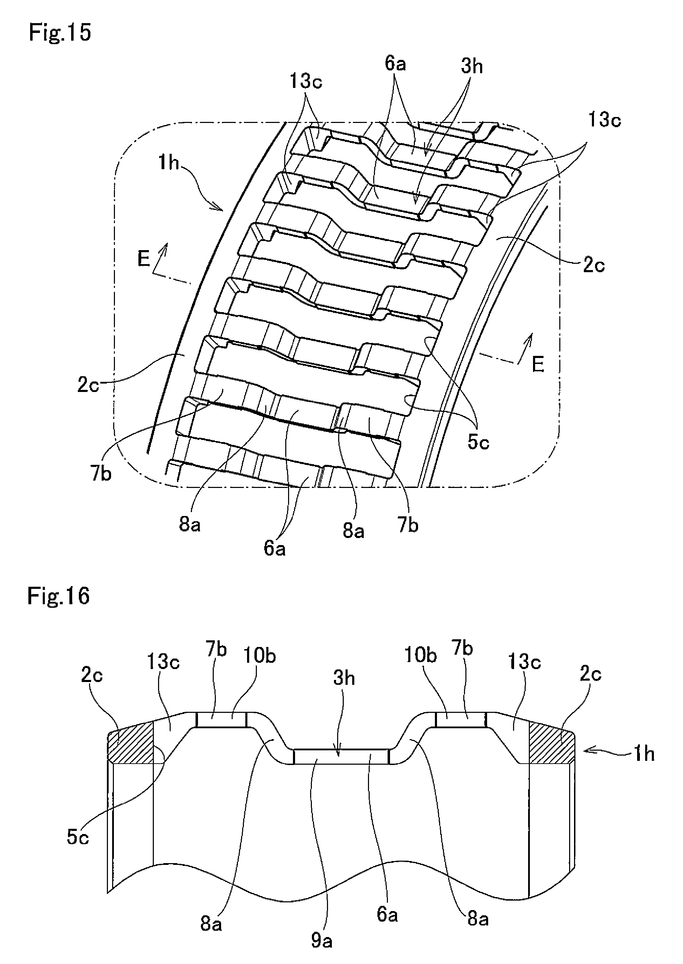

FIG. 15 and FIG. 16 illustrate an eighth example of an embodiment of the present invention. In the case of the retainer 1h of this example, the outer-circumferential surfaces of the thick sections 13c, which are provided on both end sections of the column sections 3h, and the pair of rim sections 2c are inclined surfaces that are inclined in a direction such that the outer diameter becomes larger going toward the center in the axial direction. Moreover, the portions of the inner-circumferential surfaces of the thick sections 13c, except the portions adjacent to the pair of rim sections 2c, are inclined surfaces that are inclined in a direction such that the inner diameter becomes larger going toward the center in the axial direction. The diameter of the portions of the inscribed circle of the thick sections 13c, the portions being adjacent to the pair of rim sections 2c, and the diameter of the inscribed circle of inner-diameter-side straight sections 6a of the column sections 3h where the inner-diameter-side engaging sections 9a are provided, are practically equal. By using the construction of the retainer 1h of this example, it is possible to keep the resistance against the flow of lubricant into the lubricant flow paths located between the outer-circumferential surface of the retainer 1h and the outer raceway even lower. Moreover, it is possible to more easily perform the work of inserting the retainer 1h into the inner-diameter side of a gear or the like.

Furthermore, the thickness in the radial direction of the column sections 3h gradually changes at the portions near both ends in the axial direction, so when punching the pockets 5a, it is possible to lessen the amount of uneven force that is applied to the punching die. It is possible to suppress deformation such as twisting or the occurrence of burrs, it is possible to maintain punching precision, and by maintaining the durability of the punching die, it is possible to keep down the manufacturing costs for the retainer. The other construction and functions are the same as in the seventh example.

### [Ninth to Eleventh Examples]

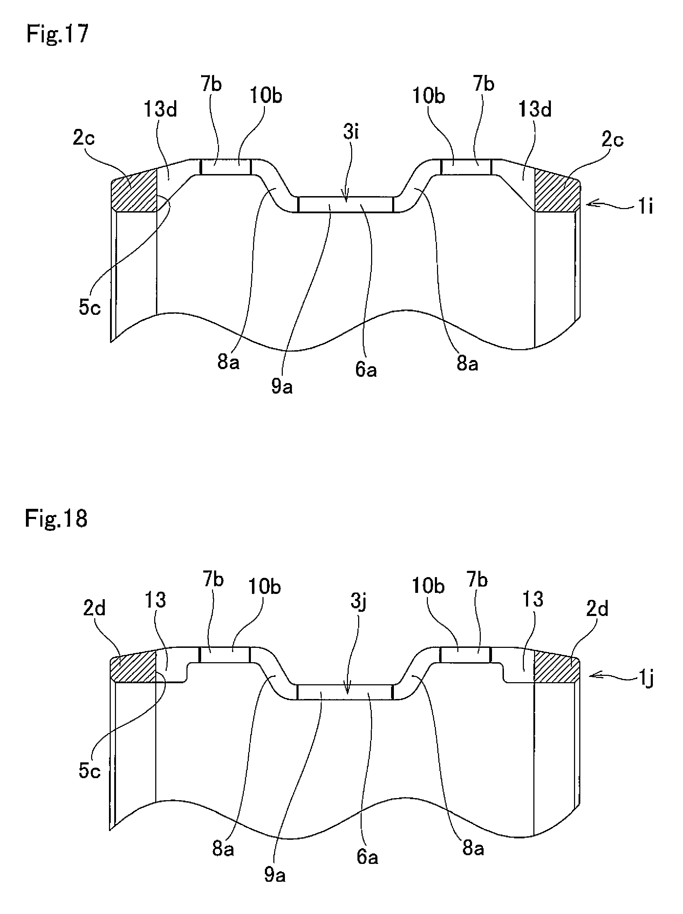

FIG. 17 to FIG. 19 illustrate ninth to eleventh examples of an embodiment of the present invention. With the retainer 1i of the ninth example illustrated in FIG. 17, the overall inner-circumferential surface of the thick sections 13d that are provided on both end sections of the column sections 3i is constructed by an inclined surface that is inclined in a direction such that the inner diameter becomes larger going toward the center in the axial direction. The other construction and functions are the same as in the eighth example of an embodiment.

In the case of the retainer 1j of a tenth example of an embodiment, the diameter of the inscribed circle of the thick sections 13 and the inner diameter of the pair of rim sections 2d are larger than the diameter of the inscribed circle of the inner-diameter side straight sections 6a of the column sections 3j where the inner-diameter-side engaging sections 9a are provided. Therefore, when the retainer 1j of this example is assembled together with plural needles between the outer raceway and inner raceway, it is possible to maintain lubricant flow paths having sufficient area not only between the outer circumferential surfaces of the pair of rim sections 2d and the outer raceway, but also between the inner-circumferential surfaces of the pair of rim sections 2d and the inner raceway. The other construction and functions are the same as in the ninth example of an embodiment.

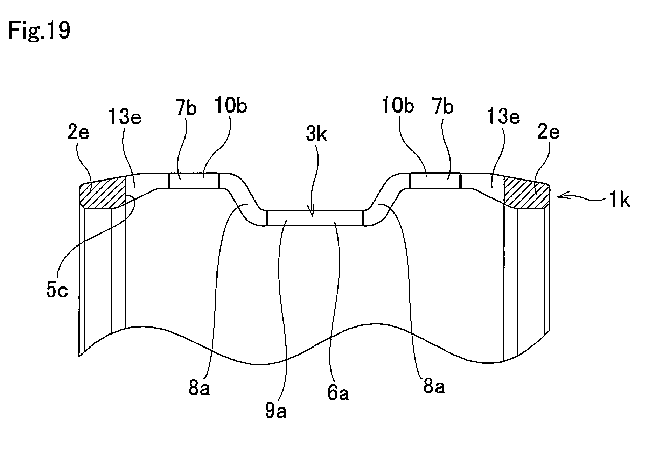

In the case of the retainer 1k of an eleventh example illustrated in FIG. 19, the inner-circumferential surfaces of the thick sections 13e that are provided on both end sections of the column sections 13k and the portions on the inner-circumferential surfaces of the pair of rim sections 2e that are adjacent to the in axial direction to the thick sections 13e are inclined surfaces that are inclined in a direction such that the inner diameter becomes larger going toward the center in the axial direction of the retainer 1k. With this construction, maintaining the amount of flow of lubricant that flows in the ring-shaped space between the inner-circumferential surface of the retainer 1k and the inner raceway is made easier by adjusting the flow of lubricant.

### [Industrial Applicability]

The retainer of the present invention can be widely applied to radial needle bearings that are assembled in rotation support sections of an automobile transmission or various kinds of machines.

### [Explanation of Reference Numbers]

1, 1a to 1k Retainer
2, 2a to 2e Rim section
3, 3a to 3k Column section
4 Needle
5, 5a to 5c Pockets
6, 6a Inner-diameter-side straight section
7, 7a, 7b Outer-diameter-side straight section
8, 8a Inclined section
9, 9a Inner-diameter-side engaging section
10, 10a, 10b Outer-diameter-side engaging section
11 Concave section
12 Corner section
13, 13a to 13e Thick section
14 Intermediate material
15 Inclined surface
16 Continuous section

## Claims

1. A retainer for a radial needle bearing, comprising:
a pair of ring-shaped rim sections provided on both end sections in an axial direction so as to be concentric with each other;
plural column sections spanning between the pair of rim sections, and uniformly spaced in a circumferential direction; and
plural pockets formed by portions that are surrounded on four sides by column sections of the plural column sections that are adjacent in the circumferential direction and the pair of rim sections, and holding needles so as to roll freely; wherein
each of the plural column sections comprises:
an inner-diameter-side straight section located in a middle section in the axial direction further inward in a radial direction than a pitch circle of the needles;
outer-diameter-side straight sections located in portions near both ends in the axial direction further outward in the radial direction than the pitch circle of the needles;
inclined sections connecting end sections in the axial direction of the inner-diameter-side straight section and of the pair of outer-diameter-side straight sections;
inner-diameter-side engaging sections provided on edges of both ends in the circumferential direction of the inner-diameter-side straight section so as to protrude in the circumferential direction, a space between the inner-diameter-side engaging sections that are adjacent in the circumferential direction being smaller than an outer diameter of the needles;
outer-diameter-side engaging sections provided on edges of both ends in the circumferential direction of the outer-diameter-side straight sections so as to protrude in the circumferential direction, a space between the outer-diameter-side engaging sections that are adjacent in the circumferential direction being smaller than the outer diameter of the needles; and
thick sections having a thickness in the radial direction that is greater than a thickness in the radial direction of the middle section in the axial direction of the column section and provided in portions on both end sections in the axial direction of the column sections between the outer-diameter-side straight sections and the pair of rim sections with regard to the axial direction so as to be continuous with inside surfaces of the pair of rim sections.

2. The retainer for a radial needle bearing according to Claim 1, wherein a diameter of an inscribed circle of the thick sections and an inner diameter of the pair of rim sections are equal to each other, and/or a diameter of a circumscribed circle of the thick sections and an outer diameter of the pair of rims sections are equal to each other; and outer-circumferential surfaces of the pair of rim sections and outer-circumferential surfaces of both end sections in the axial direction of the column sections are on a single cylindrical surface, and/or inner-circumferential surfaces of the pair of rim sections and inner-circumferential surfaces of both end sections in the axial direction of the column sections are on a single cylindrical surface.

3. The retainer for a radial needle bearing according to Claim 2, wherein the diameter of the inscribed circle of the thick sections and a diameter of an inscribed circle of the inner-diameter-side engaging sections are practically equal.

4. The retainer for a radial needle bearing according to Claim 1, wherein a diameter of a circumscribed circle of the thick sections and an outer diameter of the pair of rim sections are equal to each other; outer-circumferential surfaces of the pair of rim sections and outer-circumferential surface on both end sections in the axial direction of the column sections are on a single cylindrical surface; and a diameter of an inscribed circle of the thick sections is larger than an inner diameter of the pair of rim sections.

5. The retainer for a radial needle bearing according to Claim 4, wherein the inner-circumferential surfaces of the thick sections, and the inner-circumferential surfaces of the outer-diameter-side engaging sections are connected by inclined surfaces that are inclined in a direction such that an inner diameter of the column sections becomes larger going toward a center in the axial direction of the column sections.

6. The retainer for a radial needle bearing according to Claim 1, wherein a diameter of a circumscribed circle of the thick sections and an outer diameter of the pair of rim sections are equal to each other; outer-circumferential surfaces of the pair of rim sections and outer-circumferential surfaces of both end sections in the axial direction of the column sections are on a single cylindrical surface; and a diameter of an inscribed circle of the thick sections and an inner diameter of the pair of rim sections are larger than a diameter of an inscribed circle of the inner-diameter-side engaging sections.

7. The retainer for a radial needle bearing according to Claim 1, wherein a diameter of a circumscribed circle of the thick sections and an outer diameter of the pair of rim sections are smaller than a diameter of a circumscribed circle of the outer-diameter-side engaging sections.

8. The retainer for a radial needle bearing according to Claim 7, wherein outer-circumferential surfaces of the thick sections and the rim sections are inclined surfaces that are inclined in a direction such that an outer diameter of the inclined surfaces becomes larger going toward a center section in the axial direction.

9. The retainer for a radial needle bearing according to Claim 7, wherein inner-circumferential surfaces of the thick sections are inclined surfaces that are inclined in a direction such that an inner diameter of the inclined surfaces becomes larger going toward a center section in the axial direction.

10. The retainer for a radial needle bearing according to Claim 7, wherein a diameter of an inscribed circle of the thick sections and a diameter of an inscribed circle of the inner-diameter-side engaging sections are equal.

11. The retainer for a radial needle bearing according to Claim 7, wherein a diameter of an inscribed circle of the thick sections and an inner diameter of the pair of rim sections are larger than a diameter of an inscribed circle of the inner-diameter-side engaging sections.

12. A manufacturing method for a retainer for a radial needle bearing according to Claim 1, comprising steps of:
forming a ring-shaped intermediate material by performing a turning process on an inner-circumferential surface and an outer-circumferential surface of a cylindrical metal material so as to have a cross-sectional shape in a virtual plane that includes a center axis of the retainer for a radial needle bearing that is to be obtained, and that coincides with a cross-sectional shape of a portion that includes the column sections; and
forming pockets by punching out part of the intermediate material in the radial direction.

13. A manufacturing method for a retainer for a radial needle bearing according to Claim 1, comprising steps of:
forming a band-shaped first intermediate material having a specified length by performing plastic working on a band-shaped metal material so as to have a cross-sectional shape in a virtual plane that includes a center axis of the retainer for a radial needle bearing that is to be obtained, and that coincides with a cross-sectional shape of a portion that includes the column sections;
forming a ring-shaped second intermediate material by rolling up the first intermediate material with regard to a lengthwise direction thereof, and welding together both end sections in the lengthwise direction of the first intermediate material; and
forming pockets by punching out part of the second intermediate material in the radial direction.

14. A manufacturing method for a retainer for a radial needle bearing according to Claim 1, comprising steps of:
forming a band-shaped first intermediate material having a specified length by performing plastic working on a band-shaped metal material so as to have a cross-sectional shape in a virtual plane that includes a center axis of the retainer for a radial needle bearing that is to be obtained, and that coincides with a cross-sectional shape of a portion that includes the column sections;
forming through holes that will become the pockets by punching out part of the first intermediate material, and obtaining a second intermediate material;
cutting the second intermediate material to a specified length; and
rolling up the second intermediate material with regard to a lengthwise direction thereof, and welding together both end sections in the lengthwise direction of the second intermediate material.
